# EUROPEAN PATENT APPLICATION

(11) **EP 1 020 348 A2**
(43) Date of publication of application: **19.07.2000**
(21) Application number: 00200131.1
(22) Date of filing: 14.01.2000
(51) Int. Cl.: B62J 13/04

(54) **Chain guard**

(30) Priority: 14.01.1999 NL 1011023
(71) Applicant: Hesling B.V., 7071 CK Ulft (NL)
(72) Inventor: Heukshorst, Leon Nicodemus Jozephus, 7075 AZ Etten, Gld (NL); Kruisselbrink, Herman Jan, 7101 LR Winterswijk (NL)
(74) Representative: Van Breda, Jacobus

(57) **Abstract**

The invention relates to a chain guard for a bicycle or the like, comprising an upper case portion (1) and a lower case portion (3) each of which, at least partially, define a space suitable for the accommodation of a chain (4). Provided is an intermediate frame (2) which, forming an enclosed entity, surrounds a central opening (6) in the middle area of the chain guard. The upper case portion (1) and the lower case portion (3) are joined to the intermediate frame (2) to form a substantially completely enclosed space (9) suitable for the accommodation of the chain (4).

## Description

The invention relates to a chain guard for a bicycle or the like, comprising an upper case portion and a lower case portion each of which, at least partially, defines a space suitable for the accommodation of a chain.

Such a chain guard is known, for instance, from the Belgian patent No. 895980. The known chain guard is made of plastic material and is composed of an upper and a lower case portion, wherein the lower side of the upper case portion and the upper side of the lower case portion are provided with a U-shaped recess extending over the middle region of the chain guard, which combined recesses in the assembled condition leave an elongated opening. Both the upper and the lower case portion of the known chain guard is comprised of two halves which, exclusively along the periphery of the chain guard, are rigidly connected together, while along the entire substantially U-shaped edge of each of the two recesses, the two halves of the upper and the lower case portion extend toward one another, abutting by means of a flange, which flanges can be joined together by means of removable screws.

A disadvantage of the known chain guard is that it is composed of relatively many parts, which is a draw-back not only production technically, but also for the assembly and disassembly. In use, such disadvantages become apparent mainly when repairs become necessary at the rear wheel necessitating disassembly, which requires rather many operations. Another disadvantage is that the upper and the lower case portion each consist of two halves, which have to be firmly joined with one another along the periphery of the chain guard. This requires the rims of the halves forming the respective upper case portion or lower case portion to be re-shaped, and further finishing with the aid of decorative strip or the like. Especially these activities also contribute to making the manufacturing process for the manufacture of chain guards according to the known state of the art a complicated one.

It is the object of the invention to avoid the disadvantages of the known chain guard and to achieve further advantages, which will be further elucidated in the following.

To this end the chain guard according to the invention is characterised in that an intermediate frame is provided which, forming an enclosed entity, surrounds a central opening in the middle area of the chain guard, and in that the upper case portion and the lower case portion are joined to the intermediate frame to form a substantially completely enclosed space suitable for the accommodation of the chain.

The chain guard according to the invention comprises substantially not more than three parts, namely the upper case portion, the lower case portion and the intermediate frame, wherein the intermediate frame is intended to be mounted on the frame of the bicycle, and the upper chain portion and the lower chain portion may be mounted onto the intermediate frame and removed again, if required. This makes it possible, in the first place, to achieve a considerable saving in the manufacturing costs of the chain guard, due to the fact that only three moulded parts need to be manufactured, namely the upper case portion, the lower case portion and the intermediate frame.

Using the chain guard, these advantages are immediately obvious when work has to be done to the rear wheel or the front cog-wheel. The upper case portion and the lower case portion can then simply be detached from the intermediate frame and after completion of the work they can be replaced. It goes without saying that the various parts of the chain guard can be executed in different colours in order to facilitate mounting the upper case portion and the lower case portion in the correct place, while in addition endeavouring to attractively design the chain guard according to the invention.

In a particular aspect of the invention the chain guard is characterised in that the upper case portion and the lower case portion each are provided with side walls which weldlessly and smoothly extend to form a curved connective wall of the two side walls, such that in cross-sectional view the upper case portion and the lower case portion each are substantially U-shaped, and in that, the intermediate frame has an arched wall extending transversely, whose ends are designed for adjoining the side walls of the upper case portion and the lower case portion. This is in keeping with the objective of manufacturing the chain guard such as to comprise the fewest possible parts and of keeping the assembly and disassembly as simple as possible. Since there are no welding joints in the upper case portion and the lower case portion, there is no need for a decorative strip, while providing a very attractive design, and allowing the respective case portions each to be manufactured in one single operational step by means of, for example, injection moulding.

A further advantage is that at its insides directed toward the upper case portion and the lower case portion, the intermediate frame is provided with a sound-muffling coating. The coating chosen may be a softer plastic than the material of the upper case portion and/or the lower case portion, which will promote the sound-muffling effect.

A preferred embodiment of the chain guard according to the invention is characterised in that the intermediate frame is provided with a fender which is designed to extent substantially parallel with the chain. This effectively prevents the chain from knocking against the wall of the intermediate frame.

The advantages of the chain guard according to the invention can be achieved in particular due to the fact that the intermediate frame is designed for direct assembly onto the frame of the bicycle, and is provided with a fastening member at least at one of the ends of the arched wall to allow the removable fastening of a side wall of the upper case portion and of the under case portion.

This may be easily realised if the fastening member comprises a snap rim and/or a clip coupling. Advantageously, the snap rim is provided in the coating layer of the intermediate frame, which allows the connection of the upper case portion and the lower case portion with the intermediate frame to be extremely vibration-free.

For the direct mounting of the intermediate frame to the frame of the bicycle, the intermediate frame in a first preferred embodiment is characterised in that the same comprises a plate provided with an opening, which opening is suitable for being placed on a bracket of the bicycle.

A second preferred embodiment is characterised in that the intermediate frame is provided with a first brace which is designed for fastening a second brace provided on a bracket of the bicycle.

The invention will now be further elucidated with reference to the drawings, which
in Fig. 1 show the chain guard according to the invention in the mounted condition;
in Fig. 2A and 2B show the chain guard according to the invention in cross-sectional view according to the line A-A in Fig. 1;
in Fig. 3 show a perspective exploded view of the chain guard according to the invention; and
in Fig. 4 and 5 in side-view and in exploded view two preferred embodiments of the chain guard according to the invention.

Identical reference numbers in the Figures refer to similar parts.

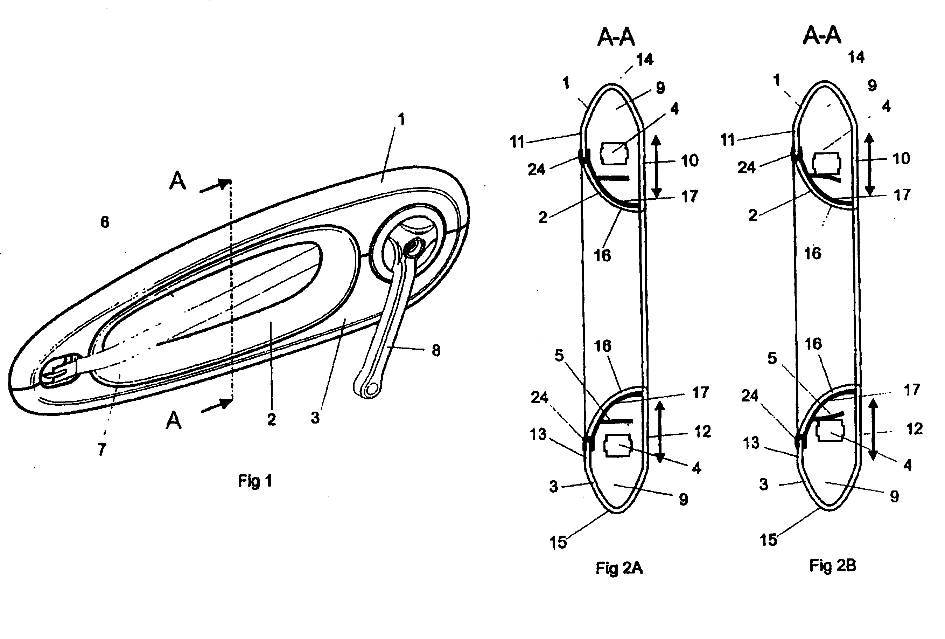

In Fig. 1 the chain guard is shown in the mounted condition, wherein the same comprises an upper case portion 1, a lower case portion 3 and an intermediate frame 2. The intermediate frame 2 forms an enclosed entity and surrounds a central opening 6 in the middle region of the chain guard, extended through which is a substantially horizontal rod 7, which forms part of the frame of the bicycle which is not further shown. In addition, the Figure shows a pedal bar 8, coupled to which is the front chain wheel.

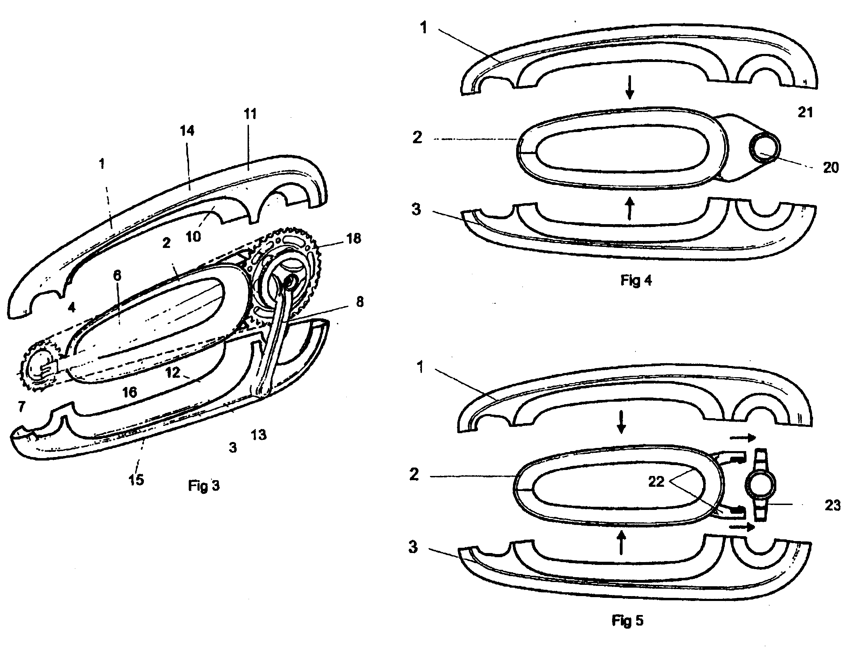

Fig. 1 and Figs. 2A and 2B show that the upper case portion 1 and the lower case portion 3 join onto the intermediate frame 2, forming a substantially entirely enclosed space 9 suitable for the accommodation of the chain 4. Figs. 2A and 2B, but also Fig. 3 clearly show that the upper case portion 1 and the lower case portion 3 are each provided with side walls 10, 11 or 12, 13 respectively, which weldlessly and smoothly form a curved connective wall 14 or 15 respectively of the side walls, such that in cross-sectional view the upper case portion 1 and the lower case portion 3 each are substantially U-shaped, as can be clearly seen in Figs. 2A and 2B. In the transverse direction, the intermediate frame 2 has an arched wall 16, as is most clearly shown in the Figs. 2A and 2B. The ends of said wall 16 are designed to be joined to the side walls 10, 11 of the upper case portion 1 and to the side walls 12, 13 of the lower portion 3 (see also in particular Figs. 2A and 2B). In addition, the Figs. 2A and 2B show an embodiment of the chain guard according to the invention, wherein at the insides directed toward the upper case part 1 and lower case part 3 the intermediate frame 2 is provided with a sound-muffling coating 17. In the case illustrated, the intermediate frame 2 is further provided with a fender 5, extending in the chain guard, designed to extend substantially parallel to the chain 4. The fender 5 may be in directly joined to the arched wall 16 of the intermediate frame 2 or, as in the illustrated case, may be part of the sound-muffling coating 17. In Fig. 2A the situation is shown where the chain 4 runs free of the fender 5, while in Fig. 2B the situation is shown where the chain 4 abuts against the fender 5, with the result that the same becomes slightly deformed.

Referring now to the Figs. 3, 4 and 5 the intermediate frame 2 is shown equipped for direct mounting onto the frame. In Fig. 3 it is again shown that a bar 7, which is part of the bicycle frame, extends through the opening 6 which is surrounded by the intermediate frame 2, and which opening 6 is located in the middle area of the chain guard, while Fig. 3 as well as Fig. 1 further show the pedal bar 8, coupling the front chain wheel 18. The Figure further shows the rear chain wheel 19 and the chain 4 guided over the front chain wheel 18 and the rear chain wheel 19. The intermediate frame 2 is provided with a provision for the direct mounting of the intermediate frame 2 onto the frame of the bicycle, as can be seen more clearly in the Figs. 4 and 5. Fig. 4 shows the embodiment in which the intermediate frame 2 comprises a plate 21 provided with an opening 20, which opening 20 is suitable for placing onto a bracket of the bicycle. Fig. 5 shows that the intermediate frame 2 is provided with a first brace 22, which is designed for fastening onto a second brace 23 to be applied to a bracket of the bicycle.

In addition the Figs. 2A and 2B show that the intermediate frame 2 is provided with a fastening member 24, which is provided at least at one of the ends of the arched wall 16 of the intermediate frame 2 for the removable attachment of a side wall 11 or 13 respectively, of the upper case portion 1 and the lower case portion 3. In the case illustrated, the fastening member 24 is embodied as snap rim, but a clip coupling (not shown) may also be provided. In the case illustrated, the snap rim 24 is formed at the rim of the coating 17 of the intermediate frame 2, rendering the clamp connection extremely vibration-free.

## Claims

1. A chain guard for a bicycle or the like, comprising an upper case portion (1) and a lower case portion (3) each of which, at least partially, define a space suitable for the accommodation of a chain, **characterized**, in that an intermediate frame (2) is provided which, forming an enclosed entity, surrounds a central opening (6) in the middle area of the chain guard, and in that the upper case portion (1) and the lower case portion (3) are joined to the intermediate frame (2) to form a substantially completely enclosed space (9) suitable for the accommodation of the chain (4).

2. A chain guard according to claim 1, **characterized**, in that the upper case portion (1) and the lower case portion (3) each are provided with side walls (10, 11 resp. 12, 13) which weldlessly and smoothly extend to form a curved connective wall (14 resp. 15) of the two side walls, such that in cross-sectional view the upper case portion (1) and the lower case portion (3) each are substantially U-shaped, and in that, the intermediate frame (2) has an arched wall (16) extending transversely, whose ends are designed for adjoining the side walls (10, 11 resp. 12, 13) of the upper case portion (1) and the lower case portion (3).

3. A chain guard according to claim 1 or 2, **characterized**, in that at its insides directed toward the upper case portion (1) and the lower case portion (3), the intermediate frame (2) is provided with a sound-muffling coating (17).

4. A chain guard according to claim 3, **characterized**, in that the intermediate frame (2) is provided with a fender (5) which is designed to extend substantially parallel with the chain.

5. A chain guard according to one of the claims 1-4, **characterized**, in that the intermediate frame (2) is designed for direct assembly onto the frame of the bicycle, and is provided with a fastening member (24) at least at one of the ends of the arched wall (16) to allow the removable fastening of a side wall (11 resp. 13) of the upper case portion (1) and of the under case portion (3).

6. A chain guard according to claim 5, **characterized**, in that the fastening member (24) comprises a snap rim and/or a clip coupling.

7. A chain guard according to claim 6, **characterized**, in that the snap rim (24) is provided in the coating layer (17) of the intermediate frame (2).

8. A chain guard according to claims 5, 6 or 7, **characterized**, in that the intermediate frame comprises a plate (21) provided with an opening (20), which opening (20) is suitable for being placed on a bracket of the bicycle.

9. A chain guard according to claims 5, 6 or 7, **characterized**, in that the intermediate frame (2) is provided with a first brace (22) which is designed for fastening a second brace (23) provided on a bracket of the bicycle.
